# EUROPÄISCHE PATENTSCHRIFT

(11) **EP 2 812 233 B1**
(45) Veröffentlichungstag und Bekanntmachung des Hinweises auf die Patenterteilung: **18.09.2019**
(21) Anmeldenummer: 13707821.8
(22) Anmeldetag: 07.02.2013
(51) Int. Cl.: B62K 19/44, B62K 19/30, B62K 25/30, B62K 25/32, B62M 9/06, B62M 6/70, B62M 11/04, B60B 27/02

(54) **Antriebsvorrichtung für Fahrräder**
PROPULSION DEVICE FOR BICYCLES
DISPOSITIF DE PROPULSION POUR BICYCLETTE

(30) Priorität: 09.02.2012 CH 180122012
(43) Veröffentlichungstag der Anmeldung: 17.12.2014
(73) Patentinhaber: SwissFleet Services GmbH, 8050 Zürich (CH)
(72) Erfinder: DOUGLAS, Philip, CH-8933 Maschwanden (CH); GUSTERHUBER, Horst, 83334 Inzell (DE)
(74) Vertreter: Rentsch Partner AG
(86) Internationale Anmeldenummer: PCT/EP2013/052433
(87) Internationale Veröffentlichungsnummer: WO 2013/117643

(56) Entgegenhaltungen:
- EP-A2- 0 888 959
- EP-A2- 1 842 769
- WO-A1-2005/039962
- WO-A1-2009/009912
- WO-A1-2010/124742
- CN-Y- 2 920 813
- CN-Y- 201 325 566
- DE-C- 822 347
- DE-U1-202010 016 067
- GB-A- 2 456 321
- GB-A- 189 708 726
- NL-C1- 1 008 265
- US-A1- 2002 121 761
- US-A1- 2006 108 858
- US-B2- 7 104 562

## Beschreibung

Die vorliegende Erfindung liegt auf dem Gebiet der Antriebsvorrichtungen für Fahrräder.

Bis dato stellte bei allen Fahrradtypen stets die Rahmenkonstruktion das zentrale formgebende und funktionsbestimmende Element im Mittelpunkt. Durch die Vorgabe der normierten Komponenten resultierte eine starke gestalterische Limitierung der möglichen Rahmenkonstruktion. Rahmen müssen alle für Funktion und Ausstattung von Fahrrädern erforderlichen Schnittstellen aufweisen, um die jeweiligen Komponenten anbauen zu können. Abgesehen von Form- und Artenvielfalt der Fahrräder beschränken sich die allermeisten Entwicklungen meist auf den Bereich der Anbaukomponenten (abgesehen von der Gewichtsersparnis durch Einsatz neuer Materialien). Bei der Integration von Elektro-Hilfsantrieben setzt sich dieses Muster weiter fort. Auch die aus dem Stand der Technik bekannten Hersteller von Antriebseinheiten und Steuerungen (z.B. Panasonic, Bosch, Daum) konzentrieren sich hauptsächlich auf ihre Komponenten und nicht auf das Bike als Ganzes. Der Zusammenbau von Produkten verschiedener Hersteller führt dabei selten zu einem harmonischen Ganzen. Aus dem Stand der Technik sind wenige Fahrräder bekannt, bei denen der Versuch unternommen wurde, Antriebskomponenten in die eine tragende Struktur eines Rahmens zu integrieren. Diese weisen allerdings ein wenig abgerundetes Bild auf und eignen sich nur beschränkt zum Einsatz in unterschiedlichen Fahrradkonstruktionen.

EP0102942 von der Fa. Steyr Daimler Puch AG wurde 1984 erstmals publiziert und beschreibt eine Verbindungsstelle zwischen einem oberen und einem unteren, den manuellen Kurbelantrieb umfassenden, Teil eines Fahrradrahmens. Beansprucht wird eine Schnittstelle, die wahlweise den Aufbau entweder einer konventionellen starren Rahmenstruktur oder einer Rahmenstruktur mit gefederter Hinterradschwinge aufweist. Dazu sind Unter- und Sitzrohr fest mit einem Verbindungsteil verbunden und bilden eine obere Baugruppe. Um einen starren Fahrradrahmen zu erhalten, wird diese obere Baugruppe fest mit einer unteren Baugruppe verstiftet und verschraubt. Um eine gefederte Hinterradschwinge zu erhalten, wird an der Verbindungsstelle eine zusätzliche Baugruppe mit einer Gummistützfeder eingefügt.

WO09079901 von der Fa. Foster Assets Co. Ltd. wurde 2008 erstmals publiziert und beschreibt ein als zentraler Teil der Rahmenstruktur ausgebildetes Antriebsmodul für ein Fahrrad mit Hilfsantrieb. Das zentrale Antriebsmodul besteht aus einem Gleichstrommotor, einer Batterieeinheit, einer Getriebeeinheit sowie einem Modul zur Motorsteuerung. Die Batterieeinheit wird in einem abgedichteten Gehäuse untergebracht, das nicht zwingend räumlich nahe bei den anderen Teilen des Antriebs angeordnet werden muss. Verschiedene räumliche Ausrichtungen bei der Montage des Antriebsmoduls erlauben den Einbau in Fahrräder mit unterschiedlichen Rahmenformen und unterschiedlichen Betriebsarten. Der Antrieb erfolgt über einen konventionellen Kettenantrieb.

EP2287065 (resp. US2011042156) von der Fa. Fairly Bike Manufacturing Co. Ltd. wurde 2011 erstmals publiziert und beschreibt das Konzept eines Fahrrads mit Hilfsantrieb, bei dem insbesondere die Batterieeinheit für den Antrieb und weitere elektronische Bauteile in einem speziell grossvolumigen Sattelrohr des Rahmens untergebracht werden. Die elektronischen Komponenten werden dazu in einem aus dem Sattelrohr herausnehmbaren Batteriegehäuse angeordnet, welches gleichzeitig auch der Aufnahme, Höhenverstellung und Befestigung der Sattelstütze dient.

EP2230164 (resp. US2010237585) von der Fa. Thömus Veloshop wurde 2010 erstmals publiziert und beschreibt einen Fahrradrahmen, in welchem eine für einen Hilfsantrieb geeignete Batterieeinheit im Unterrohr geschützt untergebracht werden kann. Dazu verfügt das Unterrohr einen Rohrabschnitt mit einer verschliessbaren Öffnung durch welche eine Batterieeinheit auf einfache Weise in den Rohrabschnitt eingebracht oder aus diesem entnommen werden kann. Ein Antriebsmotor ist in ein Hinterrad integriert.

DE202004014189 von Reinhold Gruber wurde 2004 erstmals publiziert und zeigt ein Fahrrad mit einem Hilfsantrieb, wobei Motor und Getriebe zusammen mit einem Montageadapter im normalen Sattelrohr integriert sind. Das Antriebsmoment des Motors wird innerhalb des Rahmens im Bereich des Tretlagers direkt auf die Tretachse übertragen.

DE19840576 von der Fa. SRAM Deutschland GmbH wurde 2000 erstmals publiziert und beschreibt ein gekapseltes Antriebsmodul für ein Fahrrad. Das Antriebsmodul besteht aus einem Kettenkasten, der als tragender Teil der Rahmenstruktur ausgebildet ist und mit einem Deckel verschlossen werden kann. In seinem Inneren befinden sich Komponenten zur Kraftübertragung vom Tretlager zur Nabe des hinteren Laufrades, ein Schliessmechanismus sowie Betätigungszüge für eine Bremseinrichtung und die Schaltung einer Mehrgangnabe. Das Antriebsmodul stellt den einzigen Teil der hinteren Rahmenstruktur dar. Es wird insbesondere auf die ansonsten übliche Unterrohrkonstruktion auf der anderen Seite des hinteren Laufrades verzichtet, so dass das beschriebene Antriebsmodul als einseitiger Träger der Nabe des hinteren Laufrades dient. Das Antriebsmodul wird über eine ausserhalb des gekapselten Gehäuses angeordnete leicht lösbare Verbindungsstelle mit dem vorderen Teil des Fahrradrahmens verbunden.

EP1188659 von der Fa. Honda Motor Co. Ltd. wurde 2002 erstmals publiziert und zeigt ein zerlegbares Fahrrad mit Hilfsantrieb. Die Nabe des hinteren Laufrades wird beidseitig an einem zweigeteilten hinteren Teil der Rahmenstruktur befestigt. Diese sind durch Verschraubungen miteinander verbunden. Der hintere Teil der Rahmenstruktur wird durch eine Art von Scharnier mit der vorderen Rahmenstruktur auf einfache Art lösbar verbunden. Die Sattelstange wird direkt am hinteren Teil der Rahmenstruktur mittels Klemmung befestigt, wobei kein herkömmliches Sattelrohr vorhanden ist. Die Batterieeinheit wird zwischen den beiden Teilen der hinteren Rahmenstruktur befestigt, wogegen die restlichen Komponenten des Antriebs unterhalb dieser angeordnet sind.

Eine Aufgabe der Erfindung besteht darin, eine verbesserte Antriebsvorrichtung für ein Fahrrad zu zeigen.

Diese Aufgabe wird durch die in den Patentansprüchen definierte Antriebsvorrichtung gelöst.

Eine Ausführungsform basiert auf einer Antriebsvorrichtung, welche als Zentraleinheit dient und zum Aufbau unterschiedlichster Fahrradkonzepte geeignet ist. Die erfindungsgemässe Antriebsvorrichtung stellt in der Regel das tragende und funktionelle Zentralelement des Fahrrads dar, sozusagen zugleich der Rumpf und das Herz eines Fahrrades. Eine Ausführungsform der Antriebsvorrichtung enthält, in einem ein- oder mehrteiligen Gehäuse vereint, ein Tretlager, ein Getriebe, einen Abtrieb, ein Ritzel sowie eine Bremse für das Hinterrad. Weiterhin können ein allfälliger Hilfsantrieb in Form eines Elektroantriebs sowie dazugehörige Aggregate, z.B. Akku und/oder Steuerung, im selben oder einem weiteren Gehäuse untergebracht sein. Somit können die wesentlichen technischen Funktionselemente eines Fahrrads in der Antriebsvorrichtung integriert werden.

In einer Ausführungsform weist die zentrale Antriebsvorrichtung einen durchgängig modularen Aufbau auf und bietet eine einheitliche Plattform, z.B. zum Aufbau als Bike, Pedelec oder E-Bike in verschiedensten Varianten. Die wesentlichen Merkmale dieser zentralen Einheit können wie folgt zusammengefasst werden. Die Antriebsvorrichtung dient als robuster Strukturträger, vorzugsweise mit zwei beidseitigen Halbschalen (Schwingen) als tragende Verbundkonstruktion. Je nach Ausführungsform umfasst die Antriebsvorrichtung eine starre oder eine gefederte Hinterradschwinge. Diese kann z.B. um die Tretlagerachse pendelnd gelagert und mittels eines Federelements gegenüber dem Rahmen abgestützt sein. In einer bevorzugten Ausführungsform kommt ein stufenloses Getriebe zum Einsatz, welches im Bereich des Tretlagers oder der Nabe angeordnet ist und für eine optimale Kraftübertragung sorgt. Gute Resultate können mit einem stufenlosen Getriebe mit Zahnriemenabtrieb und Schneckenradsatz für den Hilfsmotor erzielt werden. Ein Drehmomentsensor kann z.B. mit der Antriebsachse des Tretlagers wirkverbunden sein und zur Steuerung eines zuschaltbaren Hilfsantriebs über einen Freilauf dienen. In die Schwinge für das Hinterrad ist mit Vorteil ein Funktionsendstück für Riemenrad, sowie eine Hinterradbremse integriert. Die Montage des Hinterrades erfolgt mit Vorteil über eine speziell ausgestaltete Steckachse. Die erfindungsgemässe Antriebsvorrichtung ermöglicht ein gegen Vandalismus geschütztes, voll gekapseltes Design, welches eine hohe Lebensdauer garantiert.

In einer bevorzugten Ausführungsform dient ein zentrales Element als tragende Struktur (Strukturträger). Der Strukturträger dient in der Regel zum Wirkverbinden der Antriebsvorrichtung mit der restlichen Rahmenstruktur (Vorderbau, resp. Hinterbau) des Fahrrades und kann je nach Anwendungsgebiet unterschiedlich ausgestaltet sein. Der Strukturträger wird z.B. als Umformteil aus Aluminium oder als faserverstärktes Kunststoffteil ausgeführt. Die Knotenpunkte zu den Peripherieteilen des Vorderbaus und des Hinterbaus des Fahrrades sind als biege- und torsionssteife Verbindung ausgeführt. Bei Bedarf können die Verbindungen lösbar ausgestaltet sein. Die Wirkverbindung zwischen dem Strukturträger und der Antriebsvorrichtung erfolgt bevorzugt über eine normierte, einfach zu lösende Schnittstelle. Insbesondere bei einer Flotte von Fahrzeugen, wie sie z.B. bei einem Fahrradverleih vorkommt, ermöglicht es den Wartungsaufwand und die Totzeit einzelner Fahrräder signifikant zu reduzieren.

In einer Ausführungsform sind über das form- und kraftschlüssig mit dem Strukturträger wirkverbundene Getriebegehäuse beidseitig am Getriebegehäuse als tragende Formteile ausgebildete Schwingen (z.B. Alu-Umformteil, CFK-Teil) angeordnet. Diese Anbindung kann in starrer Form oder aber auch z.B. um die Tretlagerachse pendelnd gelagert ausgeführt sein. So besteht die Möglichkeit, ein Fahrrad mit gefederter Hinterradschwinge zu realisieren. Ein Dämpfungselement kann im und/oder am Sattelrohr angeordnet sein und zur federnden Abstützung der Schwinge gegenüber dem restlichen Rahmen dienen.

In einer Ausführungsform ist in die Tretlagerachse ein Drehmomentsensor integriert, der erkennt, wann wie stark in die Pedale getreten wird. Über eine entsprechend parametrierbare Steuerung wird die Zu- bzw. auch Wegschaltung des Elektromotors gesteuert. Bei einer Geschwindigkeit von 25 km/h wird der Motor in der Regel abschaltet. Ausgenommen davon sind Varianten von stärkeren E-Bikes, die allerdings entsprechende Zulassung als Kleinkraftrad erfordern.

In einer Variante kommt ein spezielles Tretlagergetriebe zum Einsatz. Die Leistungsübertragung erfolgt über ein spezielles Öl unter Ausnutzung des sog. "elasto-hydrodynamischen" Effekts. Ein Vorteil besteht darin, dass es unter normalen Umständen keinen direkten metallischen Kontakt zwischen den Kraft übertragenden mechanischen Teilen gibt und dass das Getriebe somit während der gesamten Lebensdauer geschmiert und wartungsfrei ist. Bei diesem Getriebe ist eine einzige Kugel zwischen zwei, je um eine Achse drehbaren, Kegelscheiben angeordnet. Durch verstellen der Kugel kann das Übersetzungsverhältnis variiert werden. Die Verstellung der Kugel erfolgt z.B. über einen im Innern angeordneten Schieber, der über einen Bowdenzug mit einem an einem Lenker angebrachten Drehgriffschalter wirkverbunden ist. Bei Bedarf kann anstelle der manuellen Verstellung ein Stellmotor zum Einsatz kommen. Andere Ansteuerungsmöglichkeiten sind möglich.

In einer Ausführungsform weist die Antriebsvorrichtung einen zuschaltbaren, vorzugsweise bürstenlosen Antrieb auf. Dieser weist typischerweise eine Leistung zwischen 250-500 W auf. Gute Resultate werden mit integrierten, isolierten Akku-Packs auf Basis 36 V ausgelegt für Temperaturbereiche -25°C bis +85°C erzielt. Bei Bedarf können die Akkus isoliert und/oder mit einer speziellen Heizung vorgeheizt werden.

In einer Ausführungsform kommt eine Elektronikplatine mit einem Prozessor zur Steuerung von am Bike verfügbaren Funktionen zum Einsatz. Dieser kann z.B. das Motor- und das Abtriebs-Management, sowie die Sicherheitstechnik steuern, bzw. regeln. Bei Bedarf kann ein GSM-Modem, sowie ein GPS-Empfänger vorhanden sein, welche zum Lokalisieren, Aufzeichnen und Übermitteln von Position und Betriebsdaten, etc. dienen. Insbesondere bei Verleihsystemen kann damit eine Überblick über die Flotte erzielt werden.

Ein mit der Antriebsvorrichtung verbindbarer Vorderbau weist in der Regel ein Unterrohr und ein Steuerrohr auf. Diese sind z. B. als Schmiedeteil mit Steckstellen für Hydro-Bowdenzüge und Elektrik ausgestattet. Je nach Anwendungsgebiet kommt eine Gabel zur Verwendung, welche ebenfalls mit integrierten Leitungen ausgestattet ist. Gute Resultate werden mit 26" Laufrädern und Standardkomponenten wie Nabendynamo und Rollenbremse erzielt. Andere Ausführungsvarianten sind möglich. Vorbau mit integrierter Beleuchtungseinrichtung und Lenkerausführung Vandalismus sicher mit einfacher Höhenverstellung für Bike Sharing Systeme; optional mit Lenkungsdämpfern, Bremshebel, Drehgriffschaltung bzw. Steuerung E-Bike Antrieb; Integration Multifunktions-Display zum Monitoring sowie zur Parametrierung, Anpassung bzw. zur Analyse beim Service.

Ein mit einer Antriebsvorrichtung wirkverbindbarer Hinterbau kann folgenden Aufbau aufweisen. Ein Sattelrohr kann als Spezialformteil mit integrierten Steckstellen für Elektrik, Rücklicht, verschiedene Sattelvarianten ausgestaltet sein. Bei Bedarf kann eine Stütze mit einer einfachen Höhenverstellung z.B. einer Gasdruck-Federung bzw. optional mit automatisierter Höheneinstellung per Key-Card des Kunden (integrierter Zahnstangenantrieb) ausgestaltet sein. Das hintere Laufrad ist mit Vorteil als 26" Laufrad ausgebildet. Eine speziell ausgebildete Nabe mit einer Steckachse ermöglicht es, das Laufrad ohne Eingriff in die Technik der Antriebsvorrichtung zu wechseln.

Bei Bedarf können Anschlüsse für Kotflügel und/oder Ständer und/oder Gepäckträgersysteme vorgesehen sein. In einer Ausführungsform für Mietvelos kann eine Andockkugel für ein Schloss-System vorgesehen sein. Diese kann so ausgestaltet sein, dass sie mit seitlich aus der Kugel ausfahrenden Verriegelungsbolzen verriegelt, welche in seitlichen Öffnungen an der Station arretieren. Im Rahmen kann ein integriertes Seilschloss-System vorhanden sein, welches einen RFID-Schlüsselkopf aufweist (der RFID-Schlüsselkopf muss bei Abgabe im Schlüsselköcher der Kugel verstaut sein).

Eine Ausführungsform gemäß der Erfindung umfasst eine Antriebsvorrichtung für ein Fahrrad.

Die Antriebsvorrichtung weist ein zentrales Gehäuse auf, an welchem mindestens eine Schwinge seitlich angebracht ist. Diese dient zur Halterung eines Rades, welches um eine erste Achse (Drehachse). Die mindestens eine Schwinge dient zur Aufnahme von mindestens einem Antriebsmittel. Das zentrale Gehäuse kann zur Aufnahme eines Getriebes dienen. Auf beiden Seiten des Gehäuses ist eine Schwinge angeordnet. Jede der beiden Schwingen weist einen um die Drehachse drehbaren Flansch auf, der zur Aufnahme einer Nabe eines Rades dient. Die Nabe kann quer zur Achsrichtung verlaufende erste Wirkverbindungsmittel aufweisen, welche mit korrespondierend ausgestalteten zweiten Wirkverbindungsmitteln zusammenwirken. Die Wirkverbindungsmittel können zur Übertragung der Antriebs- und Bremsmomente dienen. Bei den ersten Wirkverbindungsmitteln kann es sich z.B. um Nuten und bei den zweiten Wirkverbindungsmitteln z.B. um Zapfen handeln. Zumindest bereichsweise im Innern einer Schwinge kann ein Elektromotor angeordnet sein. Im zentralen Gehäuse kann ein Getriebe angeordnet sein. Beim Getriebe kann es sich um ein stufenloses Getriebe handeln, welches eine Kugel aufweist, die zur Kraftübertragung zwischen zwei um je eine Achse drehbaren Scheiben (flache Scheiben oder Kegelscheiben oder Topfscheiben) verstellbar eingespannt ist. Das zentrale Gehäuse kann über eine normierte Schnittstelle mit einem Strukturträger wirkverbindbar sein. In gewissen Ausführungsformen kann das zentrale Gehäuse in den Strukturträger integriert sein. Die mindestens eine Schwinge kann gegenüber dem Strukturträger um eine zweite Achse gegen die Kraft einer Federung auslenkbar sein.

Anhand der in den nachfolgenden Figuren gezeigten Ausführungsbeispiele und der dazugehörigen Beschreibung werden Aspekte der Erfindung näher erläutert. Es zeigen:
- Fig. 1: eine erfindungsgemässe Antriebsvorrichtung in einer perspektivischen Darstellung von schräg hinten und oben;
- Fig. 2: die Antriebsvorrichtung gemäss Figur 1 in einer perspektivischen Darstellung von schräg hinten und oben mit einem demontierten Rad;
- Fig. 3: Detail A gemäss Figur 2 in einer vergrösserten Darstellung;
- Fig. 4: die Antriebsvorrichtung gemäss Figur 1 in einer Explosionsdarstellung;
- Fig. 5: die Antriebsvorrichtung gemäss Figur 1 teilweise zerlegt von schräg links vorne und oben;
- Fig. 6: die Antriebsvorrichtung gemäss Figur 1 teilweise zerlegt von schräg rechts vorne und oben;
- Fig. 7: ein Mountainbike mit einer erfindungsgemässen Antriebsvorrichtung von schräg vorne und oben;
- Fig. 8: ein Citybike mit einer erfindungsgemässen Antriebsvorrichtung von schräg vorne und oben;
- Fig. 9: ein Tandem mit einer erfindungsgemässen Antriebsvorrichtung von schräg vorne und oben;
- Fig. 10: ein dreirädriges Lastenfahrrad mit einer erfindungsgemässen Antriebsvorrichtung von schräg vorne und oben;
- Fig. 11: ein Fahrrad zum Personentransport mit einer erfindungsgemässen Antriebsvorrichtung von schräg vorne und oben;
- Fig. 12: eine zweite Variante eines Fahrzeuges zum Personen- und/oder Warentransport;
- Fig. 13: eine weitere Ausführungsform einer Antriebsvorrichtung mit einem Schloss;
- Fig. 14: Detail B gemäss Figur 13.

In den nachfolgenden Figuren sind gleich wirkende Teile mit den gleichen Bezugszeichen versehen.

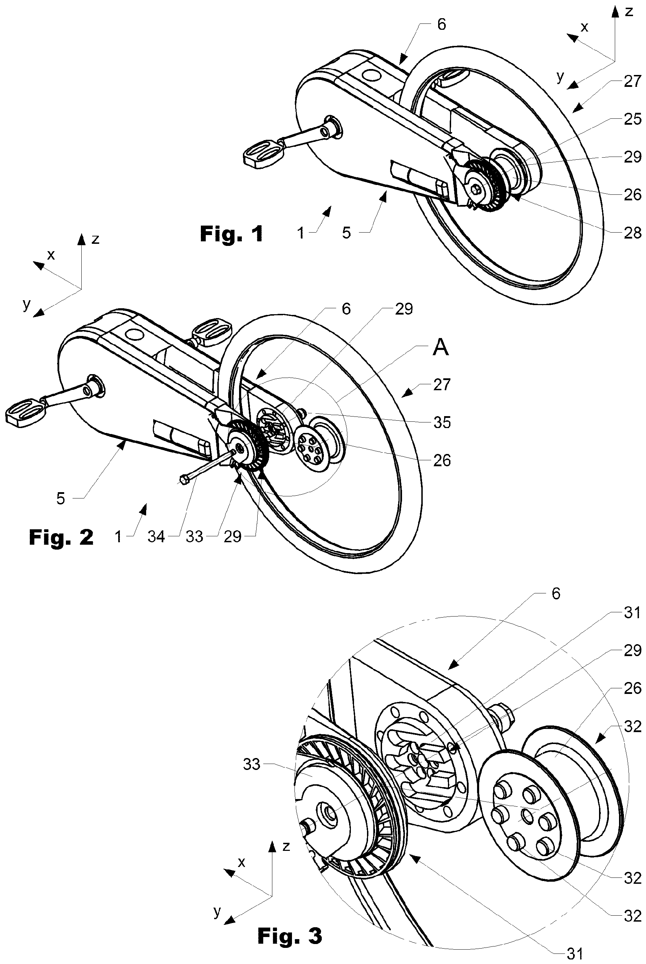

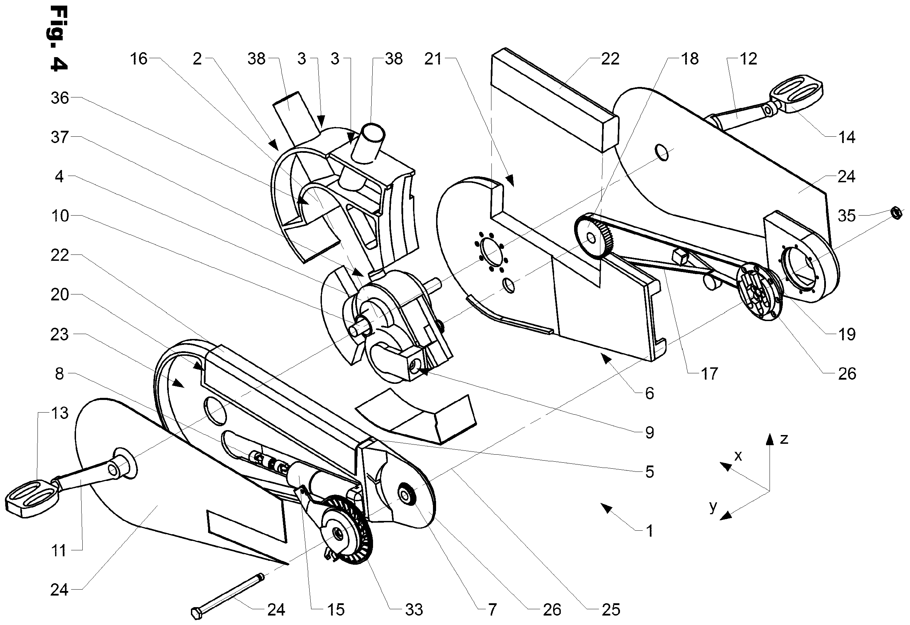

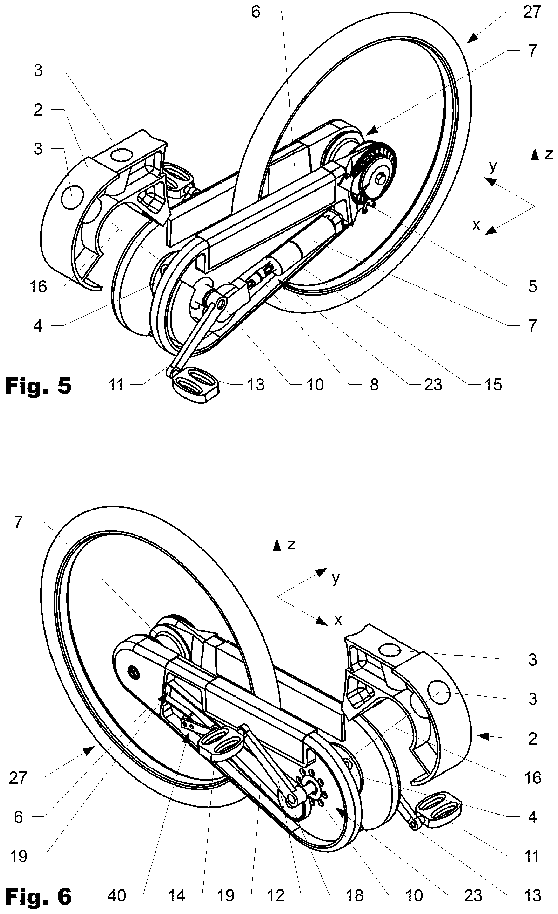

**Figur 1** zeigt eine Ausführungsform einer erfindungsgemässen Antriebsvorrichtung 1 in perspektivischen Darstellung von schräg hinten und oben mit einem montierten Rad 27. **Figur 2** zeigt die Antriebsvorrichtung 1 in einer perspektivischen Darstellung von schräg hinten und oben, bei der das Rad 27 demontiert dargestellt ist. **Figur 3** zeigt Detail A aus Figur 1 in einer vergrösserten Darstellung. **Figur 4** zeigt die Antriebsvorrichtung 1 in einer Explosionsdarstellung. **Figur 5** zeigt die Antriebsvorrichtung teilweise zerlegt von schräg vorne und links oben und Figur 6 von schräg vorne und rechts oben.

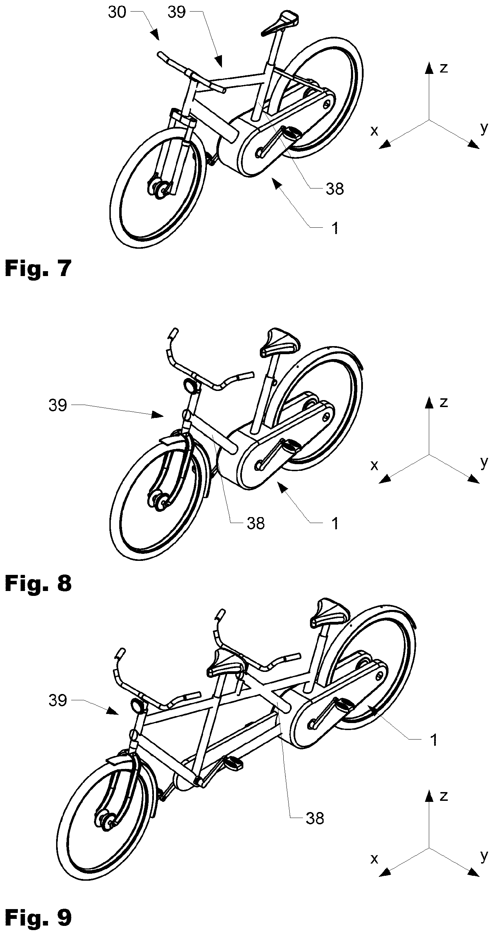

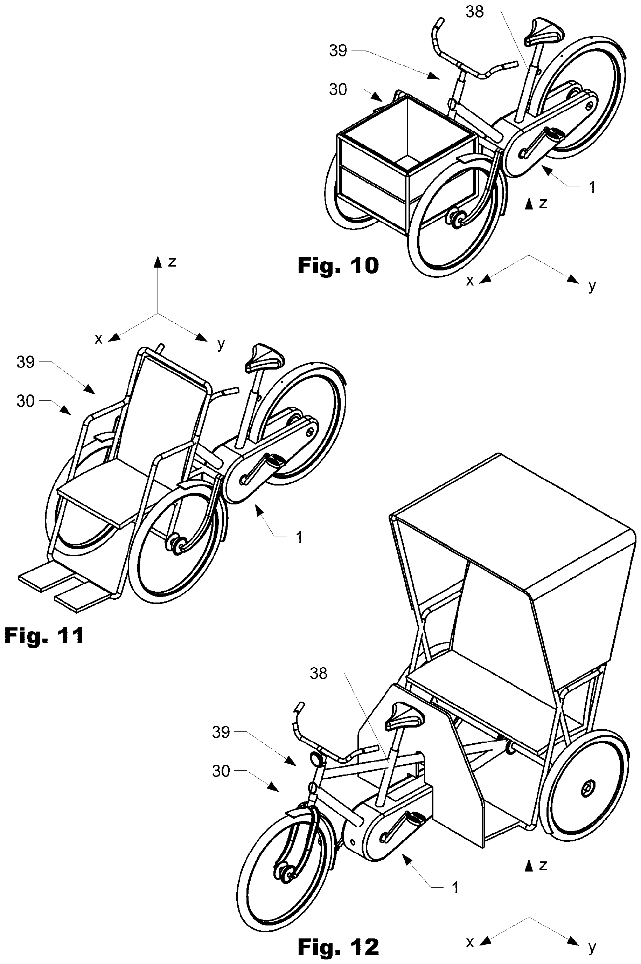

Wie u. a. in **Figur 4** zu erkennen ist, ist die Antriebsvorrichtung 1 modular aufgebaut. In montiertem Zustand wirkt die Antriebsvorrichtung 1 über normierte Schnittstellen 36, 37 mit einem rahmenseitig angeordneten Strukturträger 2 zusammen, der zur Übertragung und zum Austausch der während dem Betrieb auftretenden Kräfte mit dem restlichen Rahmen 39 des Fahrrades 30 (vgl. Beispiele gemäss den **Figuren 7-12**) dient. Beim Strukturträger2 handelt es sich bevorzugt um ein Bauteil, welches aus Aluminium oder faserverstärktem Kunststoff oder einem anderen geeigneten Material hergestellt ist. Der Strukturträger 2 weist Anschlüsse 3 für Rohre 38 eines oder mehrerer unterschiedlicher Fahrradrahmen 39 auf (vgl. **Figuren 7-12**). Wie in den **Figuren 7-12** dargestellt, eignet sich die Antriebsvorrichtung 1 für den Aufbau von unterschiedlichen Fahrrädern. Je nach Anwendungsgebiet kann der Strukturträger 2 unterschiedlich ausgestaltet und dimensioniert sein.

Die Antriebsvorrichtung 1 weist ein zentrales Gehäuse 4 auf (vgl. **Figur 4**), welches ein Getriebe (nicht näher dargestellt), vorzugsweise ein stufenloses Getriebe aufweisen kann. Bei Bedarf kann ein Getriebe in einem separaten Gehäuse untergebracht sein. Mit dem zentralen Gehäuse 4 sind in der gezeigten Ausführungsform eine linke und eine rechte Schwinge 5, 6 wirkverbunden. Diese sind als Biegeträger ausgestaltet und dienen einerseits zur Halterung einer um eine Achse 25 drehbar angeordneten Nabe 26, welche zur Aufnahme des Hinterrades 27 dient. Die Schwingen 5, 6 weisen in der gezeigten Ausführungsform einen offenen Querschnitt auf und dienen zur Beherbergung diverser weiterer Aggregate der Antriebsvorrichtung 1. In Längsrichtung gesehen (x-Richtung) ist der Querschnitt des strukturtragenden Teils der Schwingen 5, 6 zumindest bereichsweise im Wesentlichen C-förmig ausgestaltet und wird im Betrieb durch Abdeckungen 24 verschlossen. Die Abdeckungen 24 können Teil der tragenden Konstruktion sein.

Wie in den **Figur 1-3** zu erkennen ist, wird die Nabe 26 des Rades 27 durch einen ersten und einen zweiten Flansch 28, 29 gehalten. Die Flansche 28, 29 sind an den Schwingen 5, 6 einander koaxial gegenüberliegend um die Drehachse 25 drehbar gelagert angeordnet. Sie weisen in der gezeigten Ausführungsform eine spezielle Ausgestaltung auf, welche es ermöglicht, die Nabe 26, respektive das Rad 27, von der Seite her zwischen diese einzuschieben. Die Flansche 28, 29 weisen quer zur Drehachse 25 angeordnete Nuten 31 auf, welche so ausgestaltet sind, dass sie mit Zapfen 32 der Nabe 26 korrespondieren. Einerseits ermöglicht es diese Konstruktion, dass das Rad 26 von der Seite her zwischen die Naben 28, 29 eingeschoben werden kann. Weiterhin dienen die Nuten 31 und die Zapfen 32 zur Übertragung des Drehmomentes des Zahnriemens 17. Auf der gegenüberliegenden Seite dienen die Nuten 31 und die Zapfen 32 zur Übertragung eines Bremsmomentes, welches in der gezeigten Ausführungsform durch eine mit der ersten Schwinge 5 wirkverbundenen Bremse 33 erzeugt wird. Bei der Bremse 33 handelt es sich hier um ein marktübliches Bremssystem (z.B. Rollerbreak der Fa. Shimano). Bei Bedarf können andere Bremssysteme zum Einsatz kommen. Die Nabe 26 wird zwischen den beiden Flanschen 28, 29 durch eine Befestigungsschraube 34 fixiert, welche durch die Flansche 28, 29 und die Nabe 26 hindurch gesteckt und auf der gegenüberliegenden Seite durch eine Befestigungsmutter festgeschraubt wird. Bei Bedarf können andere Befestigungsmittel, z.B. ein Schnellspanner, verwendet werden.

In der gezeigten Ausführungsform sind in der linken Schwinge 5 ein in Längsrichtung eingebauter Motor 7 unterbracht, der über eine Gelenkwelle 8 und ein Ritzel 9 mit dem im Innern des Gehäuses 4 angeordneten Getriebe (nicht näher dargestellt) wirkverbunden ist. Wie in **Figur 5** zu erkennen ist, kann der Motor 7 bei Bedarf mit einem weiteren in die Schwinge 5 integrierten Reduktionsgetriebe 15 wirkverbunden sein, um die Motordrehzahl auf ein optimales Mass einzustellen. Gute Resultate werden erzielt, wenn 60-70 Umdrehungen pro Minute abgegeben werden.

Das Getriebe ist weiterhin mit einer Kurbelwelle 10 wirkverbunden, welche auf beiden Seiten über das Gehäuse 4 hervorsteht. Die Kurbelwelle 10 dient zur Aufnahme einer linken und einer rechten Tretkurbel 11, 12, sowie einer linken und einer rechten Pedale 13, 14 mittels denen ein Fahrrad manuell in herkömmlicher Art und Weise mit und/oder ohne Unterstützung des Motors 7 angetrieben werden kann. Bei Bedarf kann der Antrieb auch so ausgestaltet sein, dass er keinen manuellen Antrieb aufweist. In diesem Fall wird das Fahrrad rein elektrisch angetrieben. Anstelle von Kurbeln, respektive Pedalen, können Fussraster vorgesehen sein.

In den **Figuren 5** und **6** ist der Strukturträger 2 von der Antriebsvorrichtung 1 getrennt dargestellt. Der Strukturträger 2 ist schräg vorne und oberhalb der Antriebsvorrichtung 1 gezeigt. Die Montagerichtung ist durch eine gestrichelte Linie 16 schematisch dargestellt. Wie zu erkennen ist, kann bei der gezeigten Ausführungsform die Antriebsvorrichtung 1 einfach vom Strukturträger 2 gelöst werden. Dies stellt insbesondere bei Zweirädern, welche bei Vermietungen zum Einsatz kommen, erhebliche Wartungsvorteile dar, da die Komponenten einfach ausgetauscht werden können. Der Strukturträger weist hier eine gekrümmte Ausgestaltung auf, welche auf die Form des Gehäuses 4 abgestimmt ist und dieses partiell umgreift. Andere Ausgestaltungen sind möglich. Mittels Befestigungsmitteln (nicht näher dargestellt) wird der Strukturträger 2 mit dem Gehäuse 4 und/oder zumindest einer Schwinge 5, 6 wirkverbunden.

Wie in der **Figur 6** zu erkennen ist, ist in der rechten Schwinge 6 ein Zahnriemen 17 angeordnet, welcher das im Gehäuse 4 untergebrachte Getriebe über eine erste gezahnte Riemenscheibe 18 mit einer zweiten gezahnten Riemenscheibe 19 wirkverbindet und so die Antriebskraft vom Getriebe auf das Rad 27 überträgt. Der Zahnriemen wird in der gezeigten Ausführungsform durch eine Spannvorrichtung 40, welche hier durch eine gegen die Kraft einer Feder auslenkbare Rolle gebildet wird, gespannt.

Die Schwingen 5, 6 sind als tragende Teile hergestellt. Je nach Anwendungsgebiet können sie aus Aluminium, faserverstärktem Kunststoff oder einem anderen geeigneten Material hergestellt sein. In einer weiteren Ausführungsform sind sie aus gebogenem Rohr oder Rohrabschnitten hergestellt, welche über Flansche miteinander verbunden sind (nicht näher dargestellt). In einer weiteren Ausführungsform ist nur eine Schwinge vorhanden, in der die Teile der gegenüberliegenden Schwinge ebenfalls integriert sind.

In der gezeigten Ausführungsform weist jede Schwinge je ein Fach 20, 21 auf, welches z.B. zur Aufnahme eines Akkus 22 geeignet ist, der hier von oben her eingesetzt werden kann. Andere Anordnungen sind möglich. Wie u. a. in **Figur 4** zu erkennen ist, weisen die Schwingen 5, 6 je einen Hohlraum 23 auf, in welchem die Antriebsmittel 7,8, 17, 18, 19 untergebracht sind. Diese Hohlräume 23 können mit Abdeckungen 24 (vgl. **Figuren 1-3** und **4**) verschlossen werden. Bei Bedarf können die Hohlräume 23 weiter unterteilt sein.

Wie u. a. in **Figur 4** zu erkennen ist, sind die Schwingen 5, 6 und der Strukturträger mit Vorteil so ausgestaltet, dass sie bei der Herstellung in einer Richtung (hier y-Richtung) einfach entformbar sind und Hinterschnitte möglichst vermieden werden. Dies wirkt sich positiv auf die Reduktion der Herstellungskosten aus.

In den **Figuren 7-12** sind unterschiedliche Fahrräder und Transportmittel 30 gezeigt, welche alle eine erfindungsgemässe Antriebsvorrichtung 1 aufweisen. Die Antriebsvorrichtung 1 kann gefedert ausgestaltet sein, wobei die Schwingen relativ zum Gehäuse 4, respektive zum Strukturträger 2 um eine Drehachse (y-Achse) gegen die Kraft einer Federung beweglich gelagert sind. Vom Prinzip her eignet sich die Antriebsvorrichtung 1 auch zum Aufbau von Fahrzeugen mit mehr als zwei, resp. drei Rädern. Z.B. können bei einem vierrädrigen Transportmittel zwei gefedert ausgestaltete Antriebsvorrichtungen 1 zum Einsatz kommen.

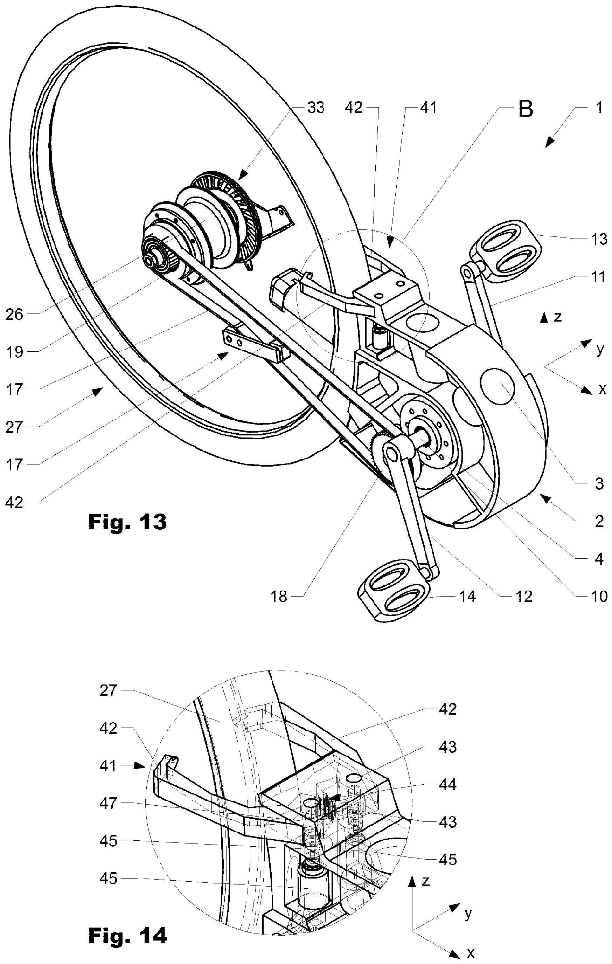

**Figur 13** zeigt eine weitere Ausführungsform einer Antriebsvorrichtung 1 in einer perspektivischen Darstellung von schräg vorne und oben. Gewisse Teile, insbesondere die Schwingen sind weggelassen, damit ein Blick auf das Innenleben der Antriebsvorrichtung 1 möglich ist. Im Unterschieb zu den vorgängig beschriebenen Varianten weist die Antriebsvorrichtung ein Schloss 41 auf, welches hier in den Strukturträger 2 integriert ist. Das elektromechanische Schloss 41 weist zwei Klauen 42 auf, welche in Schliessstellung das Rad 27 umgreifen und damit blockieren. **Figur 14** zeigt schematisch Detail B gemäss **Figur 13** in einer vergrösserten Darstellung. Damit der Aufbau besser ersichtlich wird, sind die an und für sich nicht sichtbaren Kanten gestrichelt dargestellt. Jede der Klauen 42 ist um einen Lagerbolzen 43 drehbar angeordnet. Jede der beiden Klauen 42 weist eine innen liegend angeordnete Verzahnung 44, welche ineinander eingreifen und damit die Bewegung der beiden Klauen gegenseitig koordinieren. Der Antrieb der beiden Klauen, respektive die Verriegelung erfolgt in der gezeigten Ausführungsform über Aktuatoren 45 (z.B. Stellmotoren), welche im Innern des Strukturträgers 2 angeordnet sind und über Verriegelungsbolzen 46 in Schliessstellung in Verriegelungsöffnungen 47 der Klauen 42 eingreifen und diese damit verriegeln. Beim Entriegeln werden die Verriegelungsbolzen 43 aus den Verriegelungsöffnungen 47 gezogen, so dass die Klauen 42 freigegeben werden und z.B. durch die Wirkung einer Feder (nicht näher dargestellt) öffnen, so dass das Rad 27 freigegeben wird. Das gezeigte Schloss 41 kann auch bei Bedarf auch mit anderen Fahrradrahmen kombiniert werden. Das Schloss 41 wird bevorzugt über eine Steuerung, welche vorzugsweise in die Antriebsbox 1 integriert ist, ver- bzw. entriegelt.

**Bezugszeichenliste**

| | | | |
|---|---|---|---|
| 1 | Antriebsvorrichtung | 25 | Drehachse |
| 2 | Strukturträger | 26 | Nabe |
| 3 | Anschluss | 27 | Rad (Hinterrad) |
| 4 | Gehäuse | 28 | erster Flansch |
| 5 | linke Schwinge | 29 | zweiter Flansch |
| 6 | rechte Schwinge | 30 | Zweirad/Fahrrad/Fahrzeug |
| 7 | Motor | 31 | Nut |
| 8 | Gelenkwelle | 32 | Zapfen |
| 9 | Ritzel | 33 | Bremse (Rollerbreak) |
| 10 | Kurbelwelle | 34 | Befestigungsschraube |
| 11 | linke Tretkurbel | 35 | Befestigungsmutter |
| 12 | rechte Tretkurbel | 36 | erste normierte Schnittstelle |
| 13 | linke Pedale | 37 | zweite normierte Schnittstelle |
| 14 | rechte Pedale | 38 | Rahmenrohr (Fahrradrahmen) |
| 15 | Reduktionsgetriebe | 39 | Fahrradrahmen |
| 16 | Montagerichtung Antriebsvorrichtung (gestrichelte Linie) | 40 | Riemenspanner |
| 17 | Zahnriemen | 41 | Schloss |
| 18 | erste Riemenscheibe | 42 | Klaue |
| 19 | zweite Riemenscheibe | 43 | Lagerbolzen |
| 20 | erstes Fach | 44 | Verzahnung |
| 21 | zweites Fach | 45 | Aktuator (Stellmotor) |
| 22 | Akku | 46 | Verriegelungsbolzen |
| 23 | Hohlraum (Schwinge) | | |
| 24 | Abdeckung | | |

## Patentansprüche

1. Antriebsvorrichtung (1) fürein Fahrrad, wobei die Antriebsvorrichtung (1)
a. ein zentrales Gehäuse (4) aufweist, an welchem mindestens eine Schwinge (5, 6) seitlich angebracht ist, die zur Halterung eines Rades (27) dient, welches um eine erste Achse (25) drehbar geordnet ist und wobei
b. die mindestens eine Schwinge (5, 6) zur Aufnahme von mindestens einem Antriebsmittel (7,8, 17, 18, 1 9) dient,
**dadurch gekennzeichnet, dass**
c. auf beiden Seiten des zentralen Gehäuses (4) eine Schwinge (5, 6) angeordnet ist und dass jede der beiden Schwingen (5, 6) einen um die erste Achse (25) drehbaren Flansch (28, 29) aufweist, der zur Aufnahme einer Nabe (26) eines Rades (27) dient.

2. Antriebsvorrichtung (1) nach Anspruch 1, **dadurch gekennzeichnet, dass** im Bereich der Nabe oder des Tretlagers ein stufenloses Getriebe angeordnet ist.

3. Antriebsvorrichtung (1) gemäss Patentanspruch 1, **dadurch gekennzeichnet, dass** das zentrale Gehäuse (4) zur Aufnahme eines Getriebes dient.

4. Antriebsvorrichtung (1) gemäss Patentanspruch 3, **dadurch gekennzeichnet, dass** die Flansche (28, 29) erste Wirkverbindungsmittel (31) aufweisen, welche in montiertem Zustand mit korrespondierend ausgebildeten zweiten Wirkverbindungsmittel (32) einer Nabe (26) des Rades (27) zusammenwirken.

5. Antriebsvorrichtung (1) gemäss Patentanspruch 4, **dadurch gekennzeichnet, dass** es sich bei den ersten Wirkverbindungsmitteln um Nuten (31) und bei den zweiten Wirkverbindungsmitteln (32) um Zapfen handelt.

6. Antriebsvorrichtung (1) gemäss einem der vorangehenden Patentansprüche, **dadurch gekennzeichnet, dass** zumindest in einer Schwinge (5, 6) ein Elektromotor angeordnet ist.

7. Antriebsvorrichtung (1) gemäss einem der vorangehenden Patentansprüche 3 bis 6, **dadurch gekennzeichnet, dass** das Getriebe ein stufenloses Getriebe ist, welches eine Kugel aufweist, die zur Kraftübertragung zwischen zwei um je eine Achse drehbaren Scheiben verstellbar eingespannt ist.

8. Antriebsvorrichtung (1) gemäss einem der vorangehenden Patentansprüche, **dadurch gekennzeichnet, dass** das zentrale Gehäuse (4) über eine normierte Schnittstelle (36, 37) mit einem Strukturträger (2) wirkverbindbar ist.

9. Antriebsvorrichtung (1) gemäss einem der Patentansprüche 1 bis 7 **dadurch gekennzeichnet, dass** das zentrale Gehäuse (4) in einen Strukturträger (2) integriert ist.

10. Antriebsvorrichtung (1) gemäss einem der vorangehenden Patentansprüche, **dadurch gekennzeichnet, dass** in einem ein oder mehrteiligen Gehäuse ein Tretlager, ein Getriebe, ein Antrieb, ein Ritzel sowie eine Bremse für das Hinterrad vereint sind.

11. Antriebsvorrichtung (1) gemäss einem der vorangehenden Patentansprüche, **dadurch gekennzeichnet, dass** die Schwingen (5, 6), Biegeträger sind und zur Halterung einer um eine Achse (25) drehbar angeordneten Nabe (26), welche zur Aufnahme eines Hinterrades (27) dient, ausgestaltet sind, die Schwingen (5, 6) einen offenen Querschnitt zur Beherbergung diverser weiterer Aggregate der Antriebsvorrichtung aufweisen, der strukturtragende Teil der Schwingen (5,6) einen offenen in Längsrichtung (x) gesehen zumindest bereichsweise C-förmigen Querschnitt aufweist, welcher im Betrieb durch Abdeckungen (24) verschlossen ist.

12. Antriebsvorrichtung (1) gemäss Anspruch 8 oder 9 , **dadurch gekennzeichnet, dass** die mindestens eine Schwinge (5, 6) gegenüber dem Strukturträger (2) um eine zweite Achse gegen die Kraft einer Federung auslenkbar ist.

13. Fahrrad (30) mit einer Antriebsvorrichtung (1) gemäss einem der vorangehenden Patentansprüche.

## Claims

1. Drive device (1) for a bicycle, wherein the drive device (1)
a. comprises a central housing (4) to which there is laterally attached at least one swingarm (5, 6) configured to hold a wheel (27) that is arranged rotatably about a first axis (25), and wherein
b. the at least one swingarm (5, 6) is configured to accommodate at least one drive means (7, 8, 17, 18, 19),
**characterized in that**
c. a swingarm (5, 6) is arranged on both sides of the central housing (4), and **in that** each of the two swingarms (5, 6) comprises a flange (28, 29) which is rotatable about the first axis (25) and which is configured to receive a hub (26) of a wheel (27).

2. Drive device (1) according to Claim 1, **characterized in that** a continuously variable transmission is arranged in the area of the hub or the bottom bracket.

3. Drive device (1) according to Claim 1, **characterized in that** the central housing (4) is configured to accommodate a transmission.

4. Drive device (1) according to Claim 3, **characterized in that** the flanges (28, 29) comprise first interconnection means (31) which, in an assembled state, interact with correspondingly designed second interconnection means (32) of a hub (26) of the wheel (27) .

5. Drive device (1) according to Claim 4, **characterized in that** the first interconnection means are grooves (31), and the second operative connection means (32) are pegs.

6. Drive device (1) according to one of the preceding claims, **characterized in that** an electric motor is arranged in at least one swingarm (5, 6).

7. Drive device (1) according to one of the preceding Claims 3 to 6, **characterized in that** the transmission is a continuously variable transmission comprising a ball which, for power transmission, is clamped adjustably between two discs which are rotatable about a respective axis.

8. Drive device (1) according to one of the preceding patent claims, **characterized in that** the central housing (4) is interconnectable to a support structure (2) by way of a standardized interface (36, 37) .

9. Drive device (1) according to one of Claims 1 to 7, **characterized in that** the central housing (4) is integrated into a support structure (2).

10. Drive device (1) according to one of the preceding claims, **characterized in that** a bottom bracket, a transmission, a drive, a pinion and a brake for the rear wheel are combined in a single-part or multipart housing.

11. Drive device (1) according to one of the preceding claims, **characterized in that**
the swingarms (5, 6) are flexural supports configured to hold a hub (26) arranged rotatably about an axis (25) and that is configured to hold a rear wheel (27),
the swingarms (5, 6) have an open cross section for accommodating various further assemblies of the drive device,
the structurally supporting part of the swingarms (5, 6) has an open cross section which is C-shaped at least in part as viewed in the longitudinal direction (x) and which, during operation, is closed by covers (24).

12. Drive device (1) according to Claim 8 or 9, **characterized in that** the at least one swingarm (5, 6) is deflectable relative to the support structure (2) about a second axis counter to the force of a spring arrangement.

13. Bicycle (30) comprising a drive device (1) according to one of the preceding claims.

## Revendications

1. Dispositif de propulsion (1) pour une bicyclette, dans lequel le dispositif de propulsion (1)
a. comporte un boîtier central (4) sur lequel au moins un bras oscillant (5, 6) est monté latéralement, lequel sert au support d'une roue (27) qui est disposée de manière rotative autour d'un premier axe (25) et dans lequel
b. l'au moins un bras oscillant (5, 6) sert à recevoir au moins un moyen de propulsion (7, 8, 17, 18, 19),
**caractérisé en ce**
c. **qu'**un bras oscillant (5, 6) est disposé des deux côtés du boîtier central (4) et en ce que chacun des deux bras oscillants (5, 6) comporte une bride (28, 29) pouvant tourner autour du premier axe (25) et qui sert à recevoir un moyeu (26) d'une roue (27).

2. Dispositif de propulsion (1) d'après la revendication 1, **caractérisé en ce qu'**une transmission à variation continue est agencée dans la zone du moyeu ou du support inférieur.

3. Dispositif de propulsion (1) selon la revendication 1, **caractérisé en ce que** le boîtier central (4) sert à recevoir une transmission.

4. Dispositif de propulsion (1) selon la revendication 1, **caractérisé en ce que** les brides (28, 29) comportent des premiers moyens de connexion fonctionnelle (31), lesquels coopèrent à l'état assemblé avec des deuxièmes moyens de connexion fonctionnelle (32) d'un moyeu (26) de la roue (27) configurés de manière correspondante.

5. Dispositif de propulsion (1) selon la revendication 4, **caractérisé en ce que** les premiers moyens de connexion fonctionnelle (31) sont des rainures et les deuxièmes moyens de connexion fonctionnelle (32) sont des projections.

6. Dispositif de propulsion (1) selon l'une des revendications précédentes, **caractérisé en ce qu'**un moteur électrique est agencé dans au moins un bras oscillant (5, 6).

7. Dispositif de propulsion (1) selon l'une des revendications précédentes 3 à 6, **caractérisé en ce que** la transmission est une transmission à variation continue, laquelle comporte une boule, qui est serrée de manière réglable entre deux disques tournant chacun autour d'un axe pour transmettre le travail.

8. Dispositif de propulsion (1) selon l'une des revendications précédentes, **caractérisé en ce que** le boîtier central (4) peut être relié de manière fonctionnelle avec une traverse structurelle (2) via une interface normée (36, 37).

9. Dispositif de propulsion (1) selon l'une des revendications 1 à 7, **caractérisé en ce que** le boîtier central (4) est intégré dans une traverse structurelle (2) .

10. Dispositif de propulsion (1) selon l'une des revendications précédentes, **caractérisé en ce qu'**un support inférieur, une transmission, une propulsion, un pignon ainsi qu'un frein pour la roue arrière sont associés dans un boîtier en une seule ou en plusieurs pièces.

11. Dispositif de propulsion (1) selon l'une des revendications précédentes, **caractérisé en ce que**
les bras oscillants (5, 6) sont des traverses flexibles et sont conçus pour maintenir un moyeu (26) agencé en rotation autour d'un axe (25) et servant à recevoir une roue arrière (27),
les bras oscillants (5, 6) comportent une section transversale ouverte pour loger divers groupes moteurs supplémentaires du dispositif de propulsion,
la partie porteuse de structure des bras oscillants (5, 6) comporte une section transversale au moins partiellement en forme de C et prévue ouverte dans la direction longitudinale (x), laquelle est fermée pendant le fonctionnement par des plaques couvrantes (24).

12. Dispositif de propulsion (1) selon la revendication 8 ou 9, **caractérisé en ce que** l'au moins un bras oscillant (5, 6) est déformable autour d'un deuxième axe par rapport à la traverse structurelle (2) contre le travail d'une suspension.

13. Bicyclette (30) dotée d'un dispositif de propulsion (1) selon l'une des revendications précédentes.
